# EUROPÄISCHE PATENTANMELDUNG

(11) **EP 0 848 203 A2**
(43) Veröffentlichungstag der Anmeldung: **17.06.1998**
(21) Anmeldenummer: 97118929.5
(22) Anmeldetag: 30.10.1997
(51) Int. Cl.: F16L 55/132

(54) **Vorrichtung zum Absperren von Gasleitungen**

(30) Priorität: 13.12.1996 DE 19651847
(71) Anmelder: Hermann-Heinz Burger Gas- und Wasserarmaturen GmbH, 59423 Unna (DE)
(72) Erfinder: Burger, Hermann-Heinz, 8849 Alpthal (CH)
(74) Vertreter: Dörner, Lothar, Dipl.-Ing.

(57) **Zusammenfassung**

Die Vorrichtung zum Absperren von Gasleitungen besteht aus einem Kopfstück-Oberteil (1), einem Kopfstück-Unterteil (2) und einem Preßkolben (3) zwischen Ober- und Unterteil (1, 2). Das Kopfstück-Oberteil (1) weist eine Gewindebohrung (15), das Kopfstück-Unterteil (2) eine Durchgangsbohrung (24) auf. Der Preßkolben (3) ist entlang seiner Längsmittellinie von einer Öffnung (34) durchsetzt und auf seiner der Öffnung (34) zugewandten Seite mit einer Ringnut (35) versehen.

## Beschreibung

Die Erfindung betrifft eine Vorrichtung zum Absperren von Gasleitungen mit einem eine Gewindebohrung aufweisenden Kopfstück-Oberteil und einem mit einer Durchgangsbohrung versehenen Kopfstück-Unterteil, zwischen denen ein Preßkolben angeordnet ist, der entlang seiner Längsmittellinie von einer Öffnung durchsetzt ist.

Bei Arbeiten an Gasleitungen in Gebäuden ist darauf zu achten, daß während der Arbeiten kein Gas austritt. Da erst bei Gas-Betriebsdrücken, die größer als 1 bar sind, eine Absperrvorrichtung außerhalb des Gebäudes vorhanden sein muß, ist es insbesondere bei Arbeiten an den Gasleitungen, deren Betriebsdruck kleiner als 1 bar ist, notwendig, provisorische Absperrungen außerhalb des Gebäudes in die Gasleitungen einzusetzen. Voraussetzung für ihre Anwendung ist, daß die jeweilige Absperrvorrichtung an die Gasleitung angepaßt werden kann. Nur so ist sichergestellt, daß nach dem Setzen der provisorischen Absperrvorrichtung kein Gas in den Raum strömt.

Als Absperrvorrichtungen bekannt sind Blasen, die in die abzusperrenden Gasleitungen eingebracht werden und mit Hilfe einer Pumpe aufgeblasen werden. Durch ihr Ausdehnen in der abzusperrenden Gasleitung schmiegt sich die Base in einem gewissen Bereich an die Innenseite des Rohres an, wodurch die Gasdichtigkeit herbeigeführt ist. Wesentlicher Nachteil dieser elastischen Blasen ist ihre hohe Anfälligkeit gegen Beschädigung durch den Rohren oder Armaturen anhaftende Grate. Weiterhin sind zum Absperren von Gasleitungen Vorrichtungen bekannt, die zwischen einem Ober- und einem Unterteil einen Preßkolben aufweisen, der nach Einbringen in die abzusperrende Gasleitung mit Hilfe einer Gewinde- oder Stopfenstange zwischen Ober- und Unterteil zusammengepreßt wird, wodurch der Preßkolben eine ballige Außenform erreicht. In zusammengepreßtem Zustand tritt der Preßkolben mit dem Bereich größten Durchmessers mit der gasführenden Leitung in Berührung, wodurch die Gasdichtigkeit herbeigeführt ist. Diese bekannten Vorrichtungen weisen den Nachteil auf, daß eine Durchmesservergrößerung der Preßkolben durch Zusammendrücken von Ober- und Unterteil nur in einem sehr begrenzten Umfang möglich ist. Dies verhindert unter anderem den Einsatz bei großen Gasleitungsdurchmessern, vor denen eine Armatur oder ein Stopfen mit kleinerem Durchmesser angeordnet ist.

Hier will die Erfindung Abhilfe schaffen. Der Erfindung liegt die Aufgabe zugrunde, eine Vorrichtung zum Absperren von Gasleitungen zu schaffen, die einerseits unempfindlich gegen Beschädigungen ist und andererseits in einem weiten Bereich dehnbar ist. Gemäß der Erfindung wird diese Aufgabe dadurch gelöst, daß der Preßkolben auf seiner der Öffnung zugewandten Seite eine Ringnut aufweist.

Mit der Erfindung ist eine Vorrichtung zum Absperren von Gasleitungen geschaffen, die unempfindlich gegen Beschädigungen durch an den Armaturen oder den Gasleitungen anhaftende Grate ist. Durch die Ringnut ist der Preßkolben nach der Erfindung verglichen mit bekannten Preßkolben bei gleichem Außendurchmesser im nicht zusammengepreßten Zustand auf einen größeren Außendurchmesser im zusammengepreßten Zustand ausdehnbar. Damit ist die Vorrichtung bei Gasleitungen einsetzbar, die einen relativ großen Durchmesser aufweisen und vor denen eine Armatur oder ein Stopfen mit geringerem Durchmesser angeordnet ist. Außerdem ist sie widerstandsfähig gegen kurze Einwirkung von Hitze und Feuer.

In Ausgestaltung der Erfindung ist die Nut V-förmig ausgebildet. Durch diese Ausbildung der Nut ist ein Einknicken des Preßkolbens beim Zusammendrücken des Preßkolbens zwischen Ober- und Unterteil im Bereich der Nut ermöglicht, wodurch zum einen das Zusammendrücken des Kolbens mit relativ geringem Kraftaufwand möglich ist, zum anderen ein Brechen des Kolbens in zusammengedrücktem Zustand vermieden ist.

In Weiterbildung der Erfindung weisen das Kopfstück-Oberteil und das Kopfstück-Unterteil auf den dem Preßkolben zugewandten Seiten Schrägen auf, die an Schrägen angepaßt sind, die an den Stirnseiten des Preßkolbens vorgesehen sind. Durch die Schrägen sowohl an dem Kopfstück-Ober- als auch dem -Unterteil ist gewährleistet, daß der Preßkolben beim Zusammendrücken sicher zwischen Ober- und Unterteil gehalten ist und sein Herausrutschen verhindert ist. Durch die Schrägen an den Stirnseiten des Preßkolbens ist dieser Effekt verstärkt.

In einer anderen Weiterbildung der Erfindung ist der Preßkolben auf einen an dem Kopfstück-Oberteil ausgebildeten Stutzen aufgeschoben, in dem die Gewindebohrung angeordnet ist. Durch den Stutzen ist der Preßkolben beim Zusammendrücken zusätzlich axial geführt. Außerdem ist der Preßkolben auch in demontiertem Zustand der Vorrichtung unverlierbar auf dem Kopfstück-Oberteil angeordnet.

In Ausgestaltung der Erfindung ist am Fuß des Stutzens eine Einschnürung vorgesehen. Durch die Einschnürung ist für den Preßkolben an seinem dem Kopfstück-Oberteil zugewandten Ende ein Rückzugsraum geschaffen, der das Zusammendrücken des Preßkolbens erleichtert.

Ein Ausführungsbeispiel der Erfindung ist in der Zeichnung dargestellt und wird nachfolgend im einzelnen beschrieben. Es zeigen:

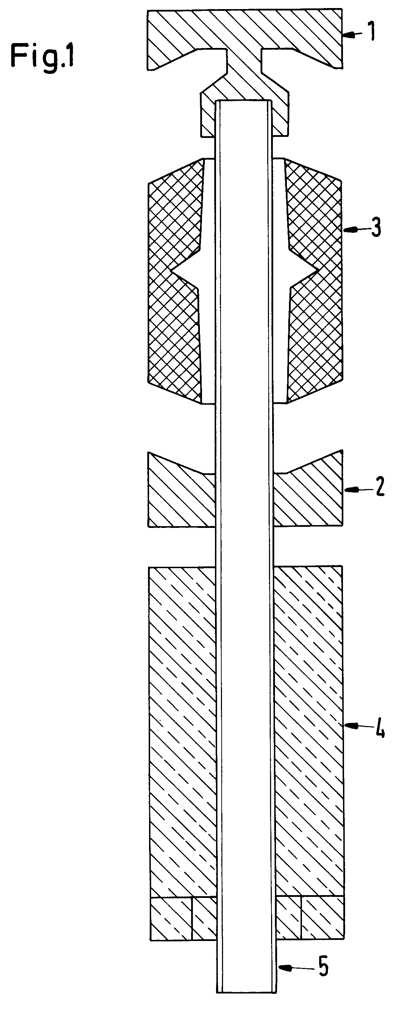

- Figur 1: eine explosionsartige Darstellung einer Vorrichtung zum Absperren von Gasleitungen in vergrößerter Darstellung;

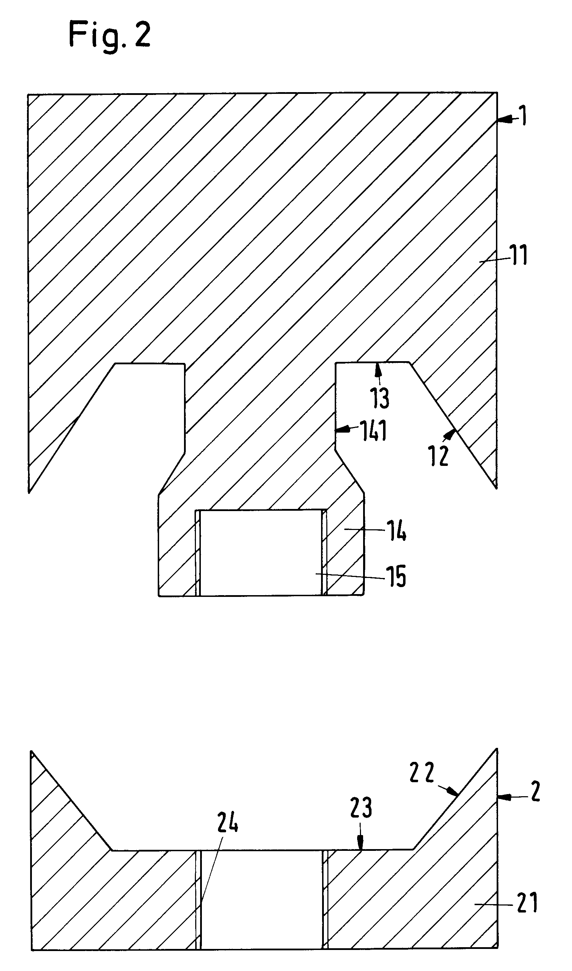

- Figur 2: ein Kopfstück-Oberteil und ein Kopfstück-Unterteil der Vorrichtung im Schnitt und in gegenüber Figur 1 vergrößerter Darstellung;

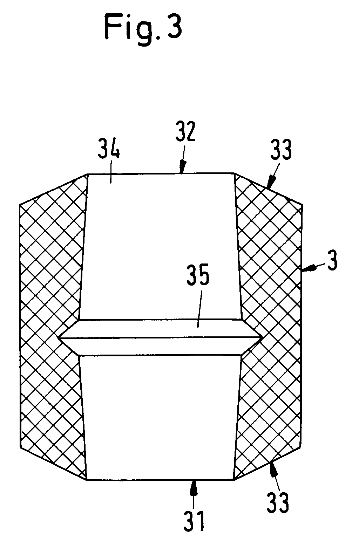

- Figur 3: einen Preßkolben der Vorrichtung im Schnitt und in gegenüber Figur 1 vergrößerter Darstellung;

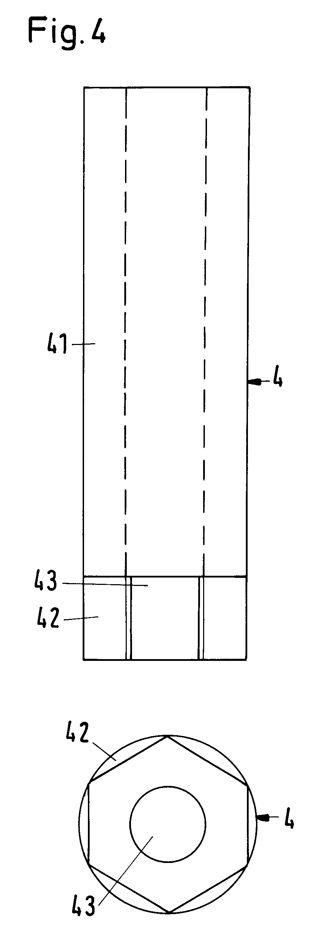

- Figur 4: eine Ansicht und eine Draufsicht auf ein Führungsrohr der Vorrichtung.

Die Vorrichtung zum Absperren von Gasleitungen weist ein Kopfstück-Oberteil 1 und einem Kopfstück-Unterteil 2 auf. Zwischen dem Kopfstück-Oberteil 1 und dem - Unterteil 2 ist ein Preßkolben 3 angeordnet. Auf der dem Preßkolben 2 abgewandten Seite des Kopfstück-Unterteils 2 ist ein Führungsrohr 4 angeordnet. Zum Zusammendrücken des Preßkolbens 3 ist eine Gewindestange 5 vorgesehen, die das Führungsrohr 4, das Kopfstück-Unterteil 2 sowie den Preßkolben 3 durchsetzt und im Kopfstück-Oberteil 1 endet.

Das Kopfstück-Oberteil 1 besteht aus einem zylindrischen Grundkörper 11. Auf der dem Preßkolben 3 zugewandten Seite weist das Kopfstück-Oberteil 1 Schrägen 12 in Form eines - negativen - Kreiskegelstumpfs auf, der von dem Rand des Kpfstück-Oberteils ausgeht und sich nach innen verjüngt. Die Schrägen 12 enden in einem Boden 13. An den Boden 13 ist mittig ein Stutzen 14 angeformt, der auf der dem Preßkolben 3 zugewandten Seite des Kopfstück-Oberteils 1 über den durch die Schrägen 12 am Grundkörper 11 als Spitzen ausgebildeten Rand hinaus ragt. Am Fuß des Stutzens 14 ist eine Einschnürung 141 vorgesehen. Auf der dem Preßkolben 3 zugewandten Seite weist der Stutzen 14 eine Gewindebohrung 15 zum Einschrauben der Gewindestange 5 auf.

Das Kopfstück-Unterteil 2 besteht aus einem scheibenartigen Grundkörper 21. Auf der dem Preßkolben 3 zugewandten Seite des Kopfstück-Unterteils 2 sind Schrägen 22 ebenfalls in Form eines - negativen - Kreiskegelstumpfs wie bei dem Kopstück-Oberteil 1 vorgesehen. Die Schrägen 22 erstrecken sich in Richtung der dem Preßkolben 3 abgewandten Seite des Kopfstück-Unterteils 2, wodurch eine schalenartige Form hervorgerufen ist. Die Schrägen 22 enden in einem Boden 23. In seiner Mitte weist das Kopfstück-Unterteil 2 eine Bohrung 24 zum Durchtritt der Gewindestange 5 auf.

Der Preßkolben 3 besteht im Ausführungsbeispiel aus vulkanisiertem Perbunan, das eine Härte von Shore 40 bis 70 aufweist. An seinen Stirnseiten 31 und 32 weist der Preßkolben 3 Schrägen 33 in Form je eines - positiven - Kreiskegelstumpfs auf. Die Form, insbesondere der Winkel der Schrägen 33 ist auf die Winkel der Schrägen 12 des Kopfstück-Oberteils 1 sowie der Schrägen 22 des Kopfstück-Unterteils 2 abgestimmt. Der Preßkolben 3 ist entlang seiner Längsmittellinie von einer Öffnung 34 durchsetzt. Der Durchmesser der Öffnung 34 verjüngt sich von der Quermittellinie des Preßkolbens 3 in Richtung der Stirnseiten 31 und 32 konusartig. Der Preßkolben 3 weist auf seiner Quermittellinie in der Wandung der Öffnung 34 eine V-förmige umlaufende Ringnut 35 auf.

Das Führungsrohr 4 besteht im wesentlichen aus einem Hohlzylinder 41. An einem Ende weist das Führungsrohr 4 einen Sechskant 42 auf. In den Sechskant 42 ist ein Innengewinde 43 eingeschnitten.

Vor dem Absperren einer Gasleitung mit der erfindungsgemäßen Vorrichtung wird zunächst der Preßkolben 3 mit seiner Öffnung 34 über den Stutzen 14 des Kopfstück-Oberteils 1 geschoben, bis die Stirnseite 31 an dem Boden 13 anliegt. Auf der Stirnseite 32 des Preßkolbens 3 wird das Kopfstück-Unterteil 2 angeordnet. Durch die Durchgangsbohrung 24 des Kopfstück-Unterteils 2 sowie die Öffnung 34 des Preßkolbens 3 wird die Gewindestange 5 geschoben und in die Gewindebohrung 15 des Kopfstück-Oberteils 1 eingeschraubt. Im Anschluß daran wird auf das dem Kopfstück-Oberteil 1 abgewandte Ende der Gewindestange 5 das Führungsrohr 4 mit Hilfe des Innengewindes 43 aufgeschraubt, bis die dem Sechskant 42 abgewandte Seite des Führungsrohrs 4 an dem Kopfstück-Unterteil 2 anliegt. In diesem Zustand wird die Vorrichtung in die abzusperrende Gasleitung eingeführt.

Zum Absperren der Gasleitung wird auf den Sechskant 42 ein Maulschlüssel angesetzt und das Führungsrohr 4 weiter auf die Gewindestange 5 aufgeschraubt.

Dadurch drückt das Führungsrohr 4 gegen das Kopfstück-Unterteil 2, das wiederum gegen die Stirnseite 32 des Preßkolbens 3 drückt. Da sich der Preßkolben 3 mit seiner Stirnseite 31 an dem Kopfstück-Oberteil 1 abstützt, welches mit der Gewindestange 5 fest verschraubt ist, wird der Preßkolben 3 zwischen Kopfstück-Oberteil 1 und Kopfstück-Unterteil 2 zusammengedrückt. Mit Hilfe der durch die Nut 35 hervorgerufenen Schwachstelle im Material des Preßkolbens 3 ist eine gezielte Verformung des Preßkolbens 3 unter dem Druck der Kopfstücke 1 und 2 hervorgerufen. Durch den Druck wölbt sich der Preßkolben 3 im Bereich der Quermittellinie nach außen. Dies wird dadurch unterstützt, daß die Schrägen 33 des Preßkolbens 3 von den Schrägen 12 des Kopfstück-Oberteils 1 und den Schrägen 22 des Kopfstück-Unterteils 2 in Richtung der Längsmittellinie der Vorrichtung geführt werden. Zusätzlich ist durch den im Verhältnis zum Durchmesser der Gewindestange 5 großen Durchmesser der Öffnung 34 sowie der konusartigen Ausgestaltung der Öffnung 34 für den Preßkolben 3 im Bereich seiner Stirnseiten 31 und 32 Raum, sich zurückzuziehen. Dieser Rückzugsraum ist auf seiten des Kopfstück-Oberteils 1 durch die am Fuß des Stutzens 14 vorgesehene Einschnürung 141 geschaffen.

Mit Hilfe der Vorrichtung ist es ohne weiteres möglich, beispielsweise eine Durchmesservergrößerung des Preßkolbens 3 von einem Zoll im nicht-zusammengedrückten Zustand auf zwei Zoll im zusammengedrückten Zustand des Preßkolbens 3 zu erzielen.

In Abwandlung zum dargestellten Ausführungsbeispiel ist es möglich, anstelle einer Gewindestange eine Standardstopfenstange zu verwenden. Darüber hinaus ist der Einsatz der Vorrichtung nicht nur auf Gasleitungen im Bereich der Hauszuführungen beschränkt, sondern auch bei größeren Gasleitungen, wie zum Beispiel Hauptgasleitungen, möglich.

## Patentansprüche

1. Vorrichtung zum Absperren von Gasleitungen mit einem eine Gewindebohrung aufweisenden Kopfstück-Oberteil und einem mit einer Durchgangsbohrung versehenen Kopfstück-Unterteil, zwischen denen ein Preßkolben angeordnet ist, der entlang seiner Längsmittellinie von einer Öffnung durchsetzt ist, dadurch gekennzeichnet, daß der Preßkolben (3) auf seiner der Öffnung (34) zugewandten Seite eine Ringnut (35) aufweist.

2. Vorrichtung nach Anspruch 1, dadurch gekennzeichnet, daß die Ringnut (35) V-förmig ausgebildet ist.

3. Vorrichtung nach Anspruch 1 oder 2, dadurch gekennzeichnet, daß das Kopfstück-Oberteil (1) und das Kopfstück-Unterteil (2) auf den dem Preßkolben (3) zugewandten Seiten Schrägen (12, 22) aufweisen, die Schrägen (33) angepaßt sind, die an den Stirnseiten (31, 32) des Preßkolbens (3) vorgesehen sind.

4. Vorrichtung nach einem der Ansprüche 1 bis 3, dadurch gekennzeichnet, daß der Durchmesser der Öffnung (34) von der Quermittellinie des Preßkolbens (3) in Richtung der Stirnseiten (31, 32) konusartig verjüngt ist.

5. Vorrichtung nach einem der Ansprüche 1 bis 4, dadurch gekennzeichnet, daß der Preßkolben (3) aus vulkanisiertem Perbunan hergestellt ist.

6. Vorrichtung nach einem der Ansprüche 1 bis 5, dadurch gekennzeichnet, daß der Preßkolben (3) auf einen an dem Kopfstück-Oberteil (1) ausgebildeten Stutzen (14) aufgeschoben ist, in dem die Gewindebohrung (15) angeordnet ist.

7. Vorrichtung nach Anspruch 6, dadurch gekennzeichnet, daß am Fuß des Stutzens (15) eine Einschnürung (141) vorgesehen ist.
